(19) Europäisches Patentamt
European Patent Office
Office européen des brevets

(11) **EP 4 772 850 A1**

(12) **EUROPEAN PATENT APPLICATION**
published in accordance with Art. 153(4) EPC

(43) Date of publication:
08.07.2026 Bulletin 2026/28

(21) Application number: 24858117.5

(22) Date of filing: 17.07.2024

(51) International Patent Classification (IPC):
*G01M 11/00* (2006.01)  *G06T 7/73* (2017.01)
*G06F 3/01* (2006.01)

(52) Cooperative Patent Classification (CPC):
G01M 11/00; G06F 3/01; G06T 7/73; G06T 7/80;
G06T 19/00

(86) International application number:
PCT/CN2024/105957

(87) International publication number:
WO 2025/044573 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.08.2023  CN 202311110278

(71) Applicant: Beijing Zitiao Network Technology Co.,
Ltd.
Beijing 100190 (CN)

(72) Inventors:
• LI, Genglei
Beijing 100028 (CN)
• SHAN, Junliang
Beijing 100028 (CN)
• CHEN, Qinglin
Beijing 100028 (CN)

(74) Representative: Isarpatent
Patent- und Rechtsanwälte PartG mbB
Friedrichstraße 31
80801 München (DE)

(54) **CALIBRATION METHOD AND APPARATUS FOR MOTION CAPTURE DEVICE, DEVICE, AND MEDIUM**

(57)    The disclosure provides a method and an apparatus for calibrating a motion capture device, a device and a medium, the motion capture device is worn on the limb of the human body, the method is applied to a head-mounted display device, and the head-mounted display device includes a camera. The method includes: collecting an image of the motion capture device through the camera; determining target posture information of a device coordinate system relative to a world coordinate system based on the image of the motion capture device, the device coordinate system being a coordinate system of the motion capture device; and calibrating the motion capture device based on the target posture information. By using the image of the motion capture device to calibrate the motion capture device, the difficulty of calibrating the motion capture device can be effectively reduced, the calibration time can be shortened, the calibration error can be reduced, and the calibration precision of the motion capture device can be improved.

COLLECT AN IMAGE OF THE MOTION CAPTURE DEVICE THROUGH THE CAMERA — S101

DETERMINE TARGET POSTURE INFORMATION OF A DEVICE COORDINATE SYSTEM RELATIVE TO A WORLD COORDINATE SYSTEM BASED ON THE IMAGE OF THE MOTION CAPTURE DEVICE, THE DEVICE COORDINATE SYSTEM IS A COORDINATE SYSTEM OF THE MOTION CAPTURE DEVICE — S102

CALIBRATE THE MOTION CAPTURE DEVICE BASED ON THE TARGET POSTURE INFORMATION — S103

FIG. 3

## Description

This application claims the benefit of Chinese Patent Application No. 202311110278. X, filed on August 30, 2023, entitled "METHOD, APPARATUS, DEVICE AND MEDIUM FOR CALIBRATING MOTION CAPTURE DEVICE", which is hereby incorporated by reference in its entirety.

## FIELD

Embodiments of the present disclosure relate to the technical field of motion capture, and more particularly, to a method, an apparatus, a device, and a medium for calibrating a motion capture device.

## BACKGROUND

Human motion capture technology has an enormous application prospect in fields such as virtual reality (VR), human-computer interaction, etc. At present, the human motion capture solution mainly performs motion capture through the motion capture device (such as the inertial sensor or the tracking device with the inertial sensor) to collect human motion data in the real world.

Before using the motion capture device to collect the human motion data, the motion capture device needs to be calibrated to ensure the accuracy and precision of the motion data collected by the motion capture device. In the related art, when the motion capture device is calibrated, it is necessary to use a reference object and fix the wearing position of the motion capture device. This will undoubtedly increase the operation difficulty of the user, bring troubles to the user, and even introduce the calibration error due to the inaccurate wearing position of the motion capture device, resulting in poor calibration precision and poor effectiveness of the motion capture device.

## SUMMARY

The present disclosure provides a method and an apparatus for calibrating a motion capture device, a device and a medium, the motion capture device is calibrated by utilizing the image of the motion capture device, the difficulty of calibrating the motion capture device can be effectively reduced, the calibration time can be shortened, the calibration error can be reduced, thereby improving the calibration precision of the motion capture device.

Based on a first aspect, embodiments of the present disclosure provide a method for calibrating a motion capture device, the motion capture device is worn on the limb of the human body, the method is applied to a head-mounted display device, the head-mounted display device includes a camera. The method includes: collecting an image of the motion capture device through the camera; determining target posture information of a device coordinate system relative to a world coordinate system based on the image of the motion capture device, the device coordinate system being a coordinate system of the motion capture device; and calibrating the motion capture device based on the target posture information.

Based on a second aspect, embodiments of the present disclosure provide an apparatus for calibrating a motion capture device, the motion capture device is worn on the limb of the human body, the apparatus is configured on a head-mounted display device, and the head-mounted display device includes a camera. The apparatus includes: an image collecting module, configured to collect an image of the motion capture device through the camera; a posture determining module, configured to determine target posture information of a device coordinate system relative to a world coordinate system based on the image of the motion capture device, the device coordinate system being a coordinate system of the motion capture device; a device calibrating module, configured to calibrate the motion capture device based on the target posture information.

Based on a third aspect, embodiments of the present disclosure provide an electronic device, including: a processor and a memory. The memory is configured to store a computer program, and the processor is configured to invoke and run the computer program stored in the memory to perform the method for calibrating the motion capture device based on the first aspect embodiment or its various implementation manners.

Based on a fourth aspect, embodiments of the present disclosure provide a computer-readable storage medium, having a computer program stored thereon, the computer program causes a computer to perform the method for calibrating the motion capture device based on the first aspect embodiment or its various implementation manners.

Based on a fifth aspect, embodiments of the present disclosure provide a computer program product including program instructions that, when executed on an electronic device, cause the electronic device to perform the method for calibrating the motion capture device based on the first aspect embodiment or its various implementation manners.

The technical solutions of the embodiments of the present disclosure at least have the following beneficial effects.

By collecting the image of the motion capture device worn on the limb of the human body through the camera, the target posture information of the device coordinate system relative to the world coordinate system is determined based on the image of the motion capture device, and then the motion capture device is calibrated based on the target posture information. In the present disclosure, by using the image of the motion capture device to calibrate the motion capture device, the difficulty of calibrating the motion capture device can be effectively reduced, the calibration time can shortened, the calibration error can be reduced, and the calibration precision of the motion capture device can be improved. Thus, the calibrated motion capture device can improve the limb motion capture effect, and provide conditions for improving the accuracy of the human posture restoration.

## BRIEF DESCRIPTION OF DRAWINGS

In order to more clearly illustrate the technical solutions in the embodiments of the present disclosure, the accompanying drawings that need to be used in the description of the embodiments will be briefly described below. Obviously, the drawings in the following description are merely some embodiments of the present disclosure, and for those ordinary skilled in the art, other drawings may be obtained based on these drawings without creative work.

FIG. 1 is a schematic diagram of an application scenario according to embodiments of the present disclosure;
FIG. 2 is a schematic diagram of a head-mounted display device, a motion capture device, and a peripheral device worn on different parts of a human body according to embodiments of the present disclosure;
FIG. 3 is a schematic flowchart of a method for calibrating a motion capture device according to embodiments of the present disclosure;
FIG. 4 is a schematic flowchart of a method for calibrating a motion capture device according to another embodiments of the present disclosure;
FIG. 5 is a schematic diagram of a relationship between a world coordinate system and a device coordinate system according to embodiments of the present disclosure;
FIG. 6 is a schematic flowchart of a method for calibrating a motion capture device according to yet another embodiments of the present disclosure;
FIG. 7 is a schematic diagram of a relationship between a world coordinate system, a reference coordinate system, and a device coordinate system according to embodiments of the present disclosure;
FIG. 8 is a schematic flowchart of a method for calibrating a motion capture device according to yet another embodiments of the present disclosure;
FIG. 9 is a schematic diagram of a relationship between a device coordinate system, a world coordinate system, and a limb coordinate system according to embodiments of the present disclosure;
FIG. 10 is a schematic block diagram of an apparatus for calibrating a motion capture device according to embodiments of the present disclosure;
FIG. 11 is a schematic block diagram of an electronic device according to embodiments of the present disclosure.

## DETAILED DESCRIPTION

The technical solutions in the embodiments of the present disclosure are clearly and completely described below with reference to the accompanying drawings in the embodiments of the present disclosure. All other embodiments obtained by those skilled in the art without creative efforts will fall within the scope of the present disclosure.

It should be noted that, the terms "first", "second", and the like in the specification and claims of the present disclosure and the foregoing drawings are used to distinguish similar object, and are not necessarily used to describe a specific order or sequence. It should be understood that, such used data may be interchanged where appropriate, such that embodiments of the present disclosure described herein can be implemented in an order other than those illustrated or described herein. Moreover, the terms "including" and "having" and any deformation thereof are intended to cover the non-exclusive inclusion, e.g., a process, method, system, product, or server including a series of steps or units not necessarily limited to those steps or units expressly listed, but may include other steps or units not expressly listed or inherent to such processes, methods, products, or devices.

The present disclosure is suitable for the human body motion capture scenario, at present, the human motion capture solution mainly performs motion capture through the motion capture device to collect human motion data in the real world. The motion capture device is basically an inertial sensor, or a tracking device with an inertial sensor, etc. To ensure the accuracy and precision of the motion data collected by the motion capture device, the motion capture device needs to be calibrated. Considering that in the related art, when the motion capture device is calibrated, it is necessary to use a reference object and fix the wearing position of the motion capture device, which will increase the operation difficulty of the user, bring troubles to the user, and even introduce the calibration error due to the inaccurate wearing position of the motion capture device, resulting in poor calibration accuracy and poor effectiveness of the motion capture device. Therefore, the present disclosure provides a method for calibrating the motion capture device, by calibrating the motion capture device through the method, the difficulty of calibrating the motion capture device can be effectively reduced, the calibration time can be shortened, the calibration error can be reduced, and the calibration precision of the motion capture device can be improved.

To facilitate the understanding of the embodiments of the present disclosure, before describing the various embodiments of the present disclosure, some concepts involved in all embodiments of the present disclosure are first appropriately explained as follows.

1) Virtual reality (VR), which is the technology for creating and experiencing the virtual world. It determines the generation of a virtual environment, and it is multi-source information (the virtual reality mentioned herein at least includes visual perception, and can also include auditory perception, tactile perception, motion perception, and even taste perception, olfactory perception, etc.), achieving the simulation of fused, interactive three-dimensional dynamic scenarios and the entity behaviors in the virtual environment, allowing the user to immerse into the simulated virtual reality environment, and achieve applications in various virtual environments such as maps, games, videos, education, healthcare, simulation, collaborative training, sales, assisted manufacturing, maintenance and repair, etc.

2) Virtual reality device (VR device), which is a terminal for achieving the virtual reality effect, and can generally be provided in forms of glasses, head mount displays (HMD), or contact lenses to achieve visual perception and other forms of perception. Certainly, the implementation forms of the virtual reality device is not limited thereto, and may be further miniaturized or enlarged based on actual needs.

Optionally, the virtual reality device described in the embodiment of the present disclosure may include, but is not limited to, the following types.

2.1) Personal computer virtual reality (PCVR) device, which uses PCs to perform related calculation and data output of the virtual reality function, and an external computer end virtual reality device uses data output by the PCs to achieve the effect of virtual reality.

2.2) Mobile virtual reality device, which supports setting the mobile terminal (such as a smart phone) in various manners (for example, setting a head-mounted display provided with a dedicated card slot). Through the wired or wireless connection with the mobile terminal, the mobile terminal performs related calculation of the virtual reality function, and outputs data to the mobile virtual reality device, for example, the virtual reality video is viewed through the APP of the mobile terminal.

2.3) All-in-One Virtual Reality Device, which is provided with a processor for performing related calculation of virtual functions. Therefore, it has independent virtual reality input and output functions, and does not need to be connected to a PC or a mobile terminal, and has high freedom of use.

3) Virtual field of view, the area in a virtual environment that can be perceived by a user through a lens in a virtual reality device, and a field of view (FOV) of the virtual field of view is used to represent the perceived area.

4) Augmented Reality (AR), which is a technology that, in a process of collecting the image through the camera, calculates the camera posture parameter of the camera in the real world (or referred to as a three-dimensional world, or a true world) in real time, and adds, based on the camera posture parameter, the virtual element to the image collected through the camera. Virtual elements include, but are not limited to, images, videos, and three-dimensional models. The goal of the AR technology is to superimpose the virtual world on the screen for interaction.

5) Mixed reality (MR), which integrates the computer-created sensory input (such as virtual objects) with the sensory input from physical setting or its representation as an integrated simulated setting. In some MR settings, the computer-created sensory input may be adapted to changes in the sensory input from the physical setting. Additionally, some electronic systems for presenting the MR setting can monitor the orientation and/or position relative to the physical setting, to enable the virtual object to interact with the real object (i.e., the physical element from physical scenario or its representations). For example, the system may monitor motion, such that the virtual plant appears stationary relative to the physical building.

6) Extended reality (XR), which refers to all real and virtual combined environments and human-computer interaction generated by computer technologies and wearable devices, including various forms such as virtual reality (VR), augmented reality (AR), and mixed reality (MR), etc.

7) Virtual scenario, which is a virtual scenario displayed (or provided) when the application runs on the electronic device. The virtual scenario may be a simulation environment of the real world, a semi-simulated and semifictional virtual scenario, or a purely fictional virtual scenario. The virtual scenario may be any one of a twodimensional virtual scenario, a 2.5-dimensional virtual scenario, or a three-dimensional virtual scenario, embodiments of the present disclosure do not limit the dimension of the virtual scenario. For example, the virtual scenario may include sky, land, ocean, etc., and the land may include environmental elements such as deserts and cities. The user can control the virtual object to move in the virtual scenario.

8) Virtual object, which is the object that interact in the virtual scenario, and is controlled by the user or the robot program (for example, the robot programs based on artificial intelligence). It is the object that can be stationary, move, and perform various behaviors, such as various characters in a game, etc.

To clearly describe the technical solution of the present disclosure, an application scenario of the technical solution of the present disclosure is described below. It should be understood that, the technical solution of the present disclosure may be applied to the following scenarios, but are not limited thereto.

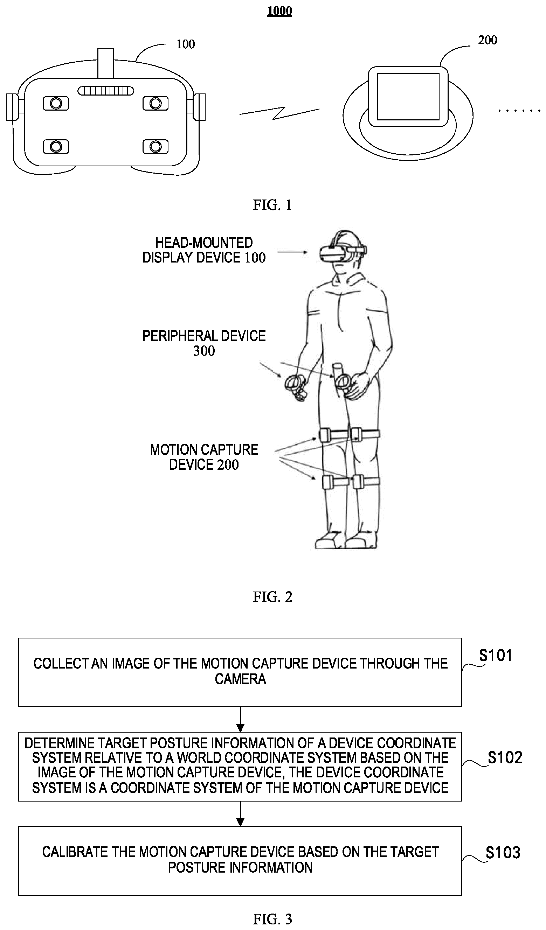

For example, FIG. 1 is a schematic diagram of an application scenario according to embodiments of the present disclosure. As illustrated in FIG. 1, the application scenario 1000 may include a head-mounted display device 100 and a motion capture device 200. The head-mounted display device 100 and the motion capture device 200 can communicate with each other.

In some implementations, the head-mounted display device 100 may be an HMD, such as a head-mounted display in a VR all-in-one machine, which is not limited in the present disclosure.

In addition, the head-mounted display device 100 is provided with a camera to collect the surrounding environment through the camera, and performs, based on the collected surrounding environment data, tracking and positioning by using the simultaneous localization and mapping (SLAM) algorithm in computer vision. The number of the cameras may be at least one. As an example, the number of the cameras in FIG. 1 is 4. In addition, the type of the camera may be a fisheye camera, a common camera, and other types of cameras, which is not limited in the present disclosure.

In some implementations, the motion capture device 200 may be an inertial sensor, or any device having an inertial sensor, etc.

In some implementations, the motion capture device 200 may be worn on the limbs of the human body, such as the limbs and the torsos. The limbs may include the upper limbs and the lower limbs. The torsos may include the waist, etc., which is not limited in the present disclosure. For example, as illustrated in FIG. 2, the motion capture devices 200 are worn on the lower limbs of the human body. The lower limbs of the human body include thighs and calves. That is, by wearing the four motion capture devices 200 on the thighs and calves of the human body respectively, the thigh motion data and the calf motion data (collectively referred to as lower limb motion data) of the human body can be collected by the motion capture device 200, and the lower limb motion data can be sent to the head-mounted display device 100, so as to achieve tracking of the lower limb motion of the human body.

It should be noted that, the limb data collected by the motion capture device 200 worn on the limbs of the human body may be 3 degree of freedom (DoF) data or 6-DoF data.

Considering that the upper limb of the human body may also make different motions, in the present disclosure, in addition to the motion capture device 200 being worn on the upper limb of the human body, the peripheral device 300 may also be worn on the upper limb of the human body. For example, it can be worn on the hands and/or arms of the human body. Then, the upper limb motion data of the human body can be collected by the peripheral device 300, and the upper limb motion data can be sent to the head-mounted display device 100, so as to achieving tracking of the upper limb motion of the human body. The wearing mode of the peripheral device 300 is illustrated in FIG. 2.

In some implementations, the peripheral device 300 may be, but is not limited to, a handle, a glove, a bracelet, a wristband, a finger ring, and other wearable devices.

In addition, the peripheral device 300 is provided with an inertial sensor, and the inertial sensor can provide 6-DoF data including the position and posture of the upper limb of the human body.

It should be noted that the inertial sensor in the embodiment specifically refers to an inertial measurement unit (IMU). The IMU may be a six-axis IMU, or a nine-axis IMU, which is not limited herein.

It can be understood that, the embodiment of the present disclosure can achieve the full-body tracking of the human body by wearing the motion capture device 200 on the limbs of the human body, or wearing the peripheral device 300 on the upper limbs of the human body and wearing the motion capture device on the lower limbs of the human body.

It should be understood that, the head-mounted display device 100, the motion capture device 200, and the peripheral device 300 illustrated in FIG. 1 and FIG. 2 are merely schematic and are not intended to limit the present disclosure.

After the application scenario of the embodiments of the present disclosure is described, the method and apparatus for calibrating a motion capture device, a device and a medium according to embodiments of the present disclosure will be described in detail with reference to the accompanying drawings.

FIG. 3 is a schematic flowchart of a method for calibrating a motion capture device according to embodiments of the present disclosure. The embodiments of the present disclosure can be applicable to calibration scenarios of motion capture devices in human motion capture, and the method for calibrating the motion capture device can be executed by the apparatus for calibrating the motion capture device. The apparatus for calibrating the motion capture device may be composed of hardware and/or software, and may be integrated in the head-mounted display device.

In the embodiment of the present disclosure, the head-mounted display device may be any electronic device capable of reproducing human body motions. Optionally, the electronic device may be an XR device. The XR device may be a VR device, an AR device, or a MR device.

As illustrated in FIG. 3, the method may include the following acts.

At block S101, an image of the motion capture device is collected through the camera.

As illustrated in FIG. 1, for example, there may be a plurality of cameras mounted on the head-mounted display device. Thus, when there are a plurality of cameras on the head-mounted display device, in the present disclosure, the downward-looking camera located on the head-mounted display device is preferentially used to collect the image of the motion capture device, such that the camera close to the side of the limb of the human body can more easily collect the image of the motion capture device worn on the limb of the human body.

Optionally, before block S101 is performed, the user may first wear the device such as the head-mounted display device and the motion capture device on different parts of the human body, such as wearing the head-mounted display device on the head of the human body, wearing the motion capture device on the lower limb of the human body, and wearing the external device on the upper limb of the human body. For another example, the head-mounted display device is worn on the human head, and the motion capture device is worn on the upper limb of the human body and the lower limb of the human body. For another example, the head-mounted display device is worn on the head of the human body, and the motion capture device is worn on the upper limb, the waist, and the lower limb of the human body, etc.

After the head-mounted display device, the motion capture device and the external device are worn, the user can start the head-mounted display device, the motion capture device and the external device to establish the communication connection between the head-mounted display device and each motion capture device, and the communication connection between the head-mounted display device and the external device, laying the foundation for subsequent data communication.

For the specific manner of establishing the communication connection between the head-mounted display device and each motion capture device, and the communication connection between the head-mounted display device and the external device, reference may be made to the establishment manners in the related art, which will not be further elaborated in the present disclosure.

Further, the head-mounted display device can collect the image of the motion capture device worn on the limb of the human body through the camera. Considering that the collected image of the motion capture device includes not only the motion capture device, but also the human limbs wearing the motion capture device. Thus, in the present disclosure, one frame of the image of the motion capture device collected through the camera on the head-mounted display device may include at least one motion capture device. Therefore, the head-mounted display device can distinguish each motion capture device in the image of the motion capture device based on, in the image of the motion capture device, the motion capture device and the limb of the human body to which each motion capture device belongs. Furthermore, the motion capture device worn on the limb of the human body can be calibrated based on each motion capture device in the image of the motion capture device.

In some optional embodiments, alternatively, in the present disclosure, when the image of the motion capture device is collected through the camera on the head-mounted display device, one image of the motion capture device may be collected in a time period, and the motion capture device is calibrated based on this image of the motion capture device. Thus, the image processing complexity of the head-mounted display device can be reduced, and the calibration efficiency for the motion capture device can be improved.

Exemplarily, the image of the motion capture device on the right calf can be collected in the first time period. The image of the motion capture device on the right thigh can be collected at a second time period. The image of the motion capture device on the left calf can be collected at a third time period. The motion capture device on the left thigh can be collected at a fourth time period. The order of the first time period, the second time period, the third time period, and the fourth time period may be the first time period → the second time period → the third time period → the fourth time period, which can be flexibly adjusted based on actual needs, which is not limited in the present disclosure.

In some optional embodiments, considering that the head-mounted display device may support a video See-Through (VST) function, the user can see, based on the VST function, the virtualized real spaces and real objects in proportion to the real world through the head-mounted display device. The virtualized real objects include, but are not limited to, tables, chairs, etc. Therefore, in the present disclosure, before the image of the motion capture device is collected through the camera, alternatively, the head-mounted display device may display, by using the VST function, the image perspective view proportional to the real world. Meanwhile, the guidance information for guiding the user to place any motion capture device in the image perspective view can be displayed in any area of the image perspective view, such that the user can place the motion capture device in the image perspective view based on the guide information. Therefore, when the user places any motion capture device in the image perspective view based on the guiding information, the camera on the head-mounted display device can collect the image of the motion capture device. The advantage of this setting is that, by using the VST function to output guidance information to the user, the user can be guided to make the corresponding motion based on the guidance information, and the user can see his motion made through the VST function, such that the user's motion can be visualized, the interaction with the head-mounted display device can be more intuitive, thereby improving the ease of use of calibration of the motion capture device.

It should be noted that, considering that the calibration principle and the calibration process of each motion capture device worn on the limb of the human body are similar, to simplify the description, in the following embodiments of the present disclosure, the technical solution of the present disclosure will be described in detail by taking the calibration of one of the motion capture devices as an example.

At block S102, target posture information of the device coordinate system relative to the world coordinate system is determined based on the image of the motion capture device, the device coordinate system is the coordinate system of the motion capture device.

The device coordinate system may be represented by $L_i$, where L stands for Local, and $i$ is identification information of the motion capture device. The identification information may be any information that can uniquely determine the identity of the motion capture device, such as the number or the name, which is not limited herein.

The world coordinate system refers to the global world coordinate system, and the global world coordinate system may be denoted as $G$, and $G$ stands for Global.

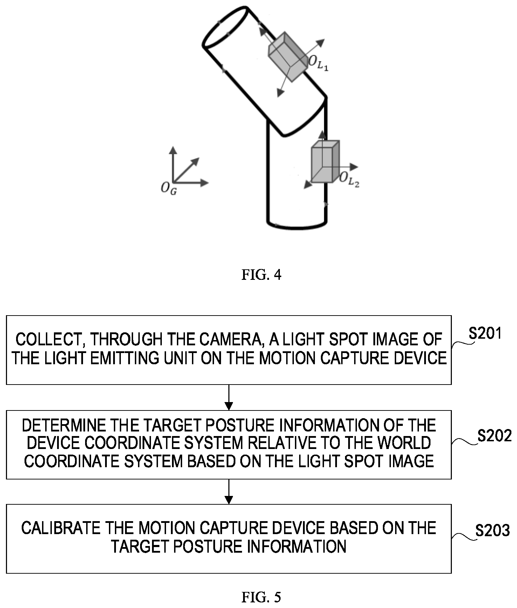

In some implementations, the relationship between the world coordinate system and the device coordinate system may be illustrated in FIG. 4. $O_G$ is the world coordinate system, $O_{L1}$ is the coordinate system of the motion capture device worn on the thigh of the lower limb of the human body, and $O_{L2}$ is the coordinate system of another motion capture device worn on the calf associated with the above thigh.

Optionally, after the image of the motion capture device collected through the camera is obtained, the head-mounted display device may extract the image feature point from the image of the motion capture device. Then, the target posture information of the device coordinate system relative to the world coordinate system can be determined based on the extracted image feature point.

Considering that the image of the motion capture device collected through the camera may include at least one motion capture device, the head-mounted display device may extract, based on the number of motion capture devices in the image of the motion capture device, the image feature point from the image of the motion capture device in different manners, as described below.

In the first manner, when there is only one motion capture device in the image of the motion capture device, the head-mounted display device can extract the image feature point from the image of the motion capture device.

In the second manner, when the image of the motion capture device includes at least two motion capture device, the head-mounted display device can extract the image feature point of each motion capture device separately from the image of the motion capture device.

In the present disclosure, the image feature point may be relatively prominent point or representative point in the image of the motion capture device, such as the corner point, the contour point, the dark point in the bright area, or the bright spot in the darker area of the image of the motion capture device, and the present disclosure does not impose any limitation on the image feature point.

In addition, the image feature point extracted from the image of the motion capture device is 2-dimensional point (i.e., 2D point).

As an optional implementation, in the present disclosure, when the image feature point is extracted from the image of the motion capture device, a feature point extraction algorithm may be used. For example, the feature point extraction algorithm may include, but is not limited to, the Scale Invariant Feature Transform (SIFT) extraction algorithm, the Speed-Up Robust Features extraction algorithm, the Orient FAST and Rated BRIEF (ORB) extraction algorithm, etc.

After the image feature point is extracted from the image of the motion capture device, the head-mounted display device may determine the target posture information of the device coordinate system corresponding to the motion capture device relative to the world coordinate system based on the image feature point extracted from the motion capture device in the image of the motion capture device. That is, the posture transformation relationship between the device coordinate system and the world coordinate system can be determined.

Considering that the model, specification, and shape of the motion capture device worn on the limb of the human body are known, it can be determined that the 3-dimensional model (i.e., 3D model) of the motion capture device is also known. Therefore, in the present disclosure, based on the image feature point of any motion capture device extracted from the image of the motion capture device and the 3D model of the motion capture device, the 3D point corresponding to the 2D image feature point of the motion capture device can be determined. Further, by using the preset calculation rule, the posture transformation relationship between the device coordinate system and the world coordinate system can be calculated based on the 2D point and the 3D point of the motion capture device.

The above preset calculation rule may be any algorithm or strategy capable of calculating the posture transformation relationship between the device coordinate system and the world coordinate system based on the 2D point and the 3D point, which is not limited in the present disclosure.

In the present disclosure, the 2D point may be understood as the projection of the 3D point on the imaging plane, and the 3D point may be understood as the 3D coordinate point in the world coordinate system.

Since the pose information of the head-mounted coordinate system relative to the world coordinate system is known, when the above preset calculation rule is the Perspective-n-Point (PnP) algorithm in computer vision, the head-mounted display device can calculate, by using the PNP algorithm, the target posture information of the device coordinate system relative to the world coordinate system based on n points (2D and 3D points of the motion capture device in the image of the motion capture device). Then, the target posture information of the device coordinate system relative to the world coordinate system can be extracted from the target pose information.

In general, the PnP algorithm may include: a P3P algorithm, a P5P algorithm, and other algorithms. In addition, the P3P algorithm is to calculate the pose information of the device coordinate system relative to the world coordinate system based on three points. The P5P algorithm is to calculate the pose information of the device coordinate system relative to the world coordinate system based on five points. Therefore, in the present disclosure, the number of feature points of the motion capture device extracted from the image of the motion capture device is at least three, and correspondingly, at least three 3D points need to be determined based on the at least three 2D points. Therefore, when the target pose information of the device coordinate system relative to the world coordinate system is calculated based on the image of the motion capture device collected through the camera, different PnP algorithms can be used based on the number of image feature points of the motion capture device in the image of the motion capture device to achieve this.

At block S103, the motion capture device is calibrated based on the target posture information.

After the target posture information of the device coordinate system relative to the world coordinate system is determined, the present disclosure can calibrate the posture of the motion capture device relative to the world based on the target posture information, such that the subsequent body motion collected by the calibrated motion capture device can be more accurate.

In some optional embodiments, the posture of the motion capture device relative to the world is calibrated. Alternatively, the initial posture of the motion capture device relative to the world can be calibrated, or the real-time posture of the motion capture device relative to the world can be calibrated, which is not limited in the present disclosure.

With the method for calibrating a motion capture device according to the embodiments of the present disclosure, by collecting the image of the motion capture device worn on the limb of the human body through the camera, the target posture information of the device coordinate system relative to the world coordinate system is determined based on the image of the motion capture device, and then the motion capture device is calibrated based on the target posture information. In the present disclosure, by using the image of the motion capture device to calibrate the motion capture device, the difficulty of calibrating the motion capture device can be effectively reduced, the calibration time can shortened, the calibration error can be reduced, and the calibration precision of the motion capture device can be improved. Thus, the calibrated motion capture device can improve the limb motion capture effect, and provide conditions for improving the accuracy of the human posture restoration.

In another optional implementation scenario, it is considered that the motion capture device may include a light emitting unit. That is, the motion capture device may be an inertial sensor having a light emitting unit, or any device having an inertial sensor and a light emitting unit, such as an optical tracker or the like. Therefore, in the present disclosure, alternatively, the light spot image of the light emitting unit on the image of the motion capture device is collected through the camera, and the motion capture device is calibrated based on the light spot image.

Alternatively, it should be noted that the light emitting unit on the motion capture device may be an LED or other light emitting device, and the light emitted may be visible light or invisible light, as long as it can be collected through the camera. In addition, the light emitting unit may be distributed, in a preset deployment mode, inside the housing of the motion capture device body or in the accessory rigidly connected to the motion capture device body (such as a base). In the present disclosure, the preset deployment mode may be flexibly set based on the body of the motion capture device or the shape of the accessory rigidly connected to the motion capture device body, which is not limited herein.

Moreover, when the motion capture device worn on the limbs of the human body includes the light emitting unit, the limb data collected by the motion capture device may include two types, which are as follows.

In the first type, the light emitting unit on the motion capture device is in lit state and is observed by the camera on the head-mounted display device, in this case, the limb motion data collected by the motion capture device is 6 degrees of freedom (DoF) data including the limb position and the limb posture of the human body.

In the second type, the light emitting unit on the motion capture device is in the lit state and cannot be observed by the camera on the head-mounted display device, the limb motion data collected by the motion capture device is 3 degrees of freedom (DoF) data including the limb posture of the human body.

As illustrated in the example illustrated in FIG. 2 above, the lower limb motion data collected by the motion capture device 200 includes two types, i.e., the first type and the second type. The first type is that when the light emitting unit on the motion capture device 200 is in the lit state and is observed by the camera on the head-mounted display device 100, the lower limb motion data collected by the motion capture device 200 is 6 degrees of freedom (DoF) data including the lower limb position and the lower limb posture of the human body. The second type is that when the light emitting unit on the motion capture device 200 is in the lit state and cannot be observed by the camera on the head-mounted display device 100, the lower limb motion data collected by the motion capture device 200 is 3 degrees of freedom (DoF) data including the lower limb posture of the human body.

The process of calibrating the motion capture device based on the light spot image is described in detail below with reference to FIG. 5. As illustrated in FIG. 5, the method includes the following steps.

At block S201, the light spot image of the light emitting unit on the motion capture device is collected through the camera.

Considering that each motion capture device worn on the limb of the human body is provided with the light emitting unit, when the light emitting units on each motion capture device are lit simultaneously and the light spot images of the light emitting units on all motion capture devices are collected at the same time through the camera on the head-mounted display device, it may happen that the head-mounted display device cannot accurately distinguish which motion capture device each light spot corresponds to based on the light spot images collected through the camera, thereby causing confusion and even calibration errors in the calibration of the motion capture device.

Based on the above reasons, in the present disclosure, when all motion capture devices are calibrated, the light emitting units on the motion capture devices are lit in the time-sharing manner, i.e., each motion capture device is lit in a certain order in each cycle, such that the camera on the head-mounted display device only collects the light spot image of the light emitting unit on one motion capture device in a time period, and the light spot image is used to calibrate the motion capture device, thereby ensuring that the calibration of each motion capture device is more accurate.

For example, in time period 1, the light emitting unit in the motion capture device worn on the left thigh is lit, and the light emitting units in the motion capture devices worn on the right thigh, the right calf and the left calf are controlled to be off. In time period 2, the light emitting unit in the motion capture device worn on the left calf is lit, and the light emitting units in the motion capture devices worn on the right thigh, the right calf and the left thigh are controlled to be off. In the time period 3, the light emitting unit in the motion capture device worn on the right thigh is lit, and the light emitting units in the motion capture devices worn on the right calf, the left thigh, and the left calf are controlled to be off. In time period 4, the light emitting unit in the motion capture device worn on the right calf is lit, and the light emitting units in the motion capture devices worn on the left thigh, the left calf and the right thigh are controlled to be off. Alternatively, the order of the time period 1, the time period 2, the time period 3, and the time period 4 may be the time period 1 → the time period 2 → the time period 3 → the time period 4. Certainly, it may also be other orders, which is not limited herein.

The light emitting unit on the motion capture device may be manually triggered by the user to light up, or the head-mounted display device may send a lighting instruction to the motion capture device to light up the light emitting unit on the motion capture device, which is not limited in the present disclosure.

In some optional implementations, when the light spot image of the light emitting unit on the motion capture device that is in the lit state is collected through the camera, if the user's top is relatively loose or other conditions occur, the camera on the head-mounted display device may not be able to collect the light spot image of the light emitting unit on the motion capture device in the lit state.

In the present disclosure, after the light emitting unit on any motion capture device is lit, the user can be guided to make a head-down motion, a kicking motion, and/or an arm-raising motion, such that the camera on the head-mounted display device can collect the light spot image of the light emitting unit on the motion capture device. The lower limb making the kicking motion or upper limb making the arm-raising motion should be the lower limb or the upper limb that wears the motion capture device in the lit state. For example, when the light emitting unit in the motion capture device on the left calf is in the lit state, the user may be guided to make the kicking motion on the left calf. For another example, when the light emitting unit in the motion capture device on the right forearm is in the lit state, the user may be guided to lift the right forearm.

It may be understood that the head-down motion, the kicking motion, and/or the arm-raising motion may be the head-down motion; or may also be the kicking motion; or may also be the arm-raising motion; or may also be the head-down motion and the arm-raising motion; or may also be the head-down motion and the kicking motion, no limitation is made here.

In addition, in the present disclosure, the user can be guided to make the head-down motion, the kicking motion, and/or the arm-raising motion by outputting the guiding voice, guiding text, and/or guiding animation to the user, which is not limited herein.

In some optional embodiments, considering that the head-mounted display device may support a Video See-Through (VST) function, the user can see, based on the VST function, the virtualized real spaces and real objects in proportion to the real world through the head-mounted display device. The virtualized real objects include, but are not limited to, tables, chairs, etc. Therefore, in the present disclosure, before the light spot image of the light emitting unit on the motion capture device is collected through the camera, alternatively, the head-mounted display device may display, by using the VST function, the image perspective view proportional to the real world. Meanwhile, the guidance information can be displayed in any area of the image perspective view to guide the user to place any motion capture device with the light emitting unit in the lit state in the image perspective view, such that the user can place the motion capture device with the light emitting unit in the lit state in the image perspective view based on the guide information. Therefore, when the user places any motion capture device with the lit light emitting unit in the image perspective view based on the guiding information, the camera on the head-mounted display device can collect the light spot image of the light emitting unit on the motion capture device. The advantage of this setting is that, by using the VST function to output guidance information to the user, the user can be guided to make the corresponding motion based on the guidance information, and the user can see his motion made through the VST function, such that the user's head-down motion, kicking motion and/or arm-raising motion can be visualized, the interaction with the head-mounted display device can be more intuitive, thereby improving the ease of use of calibration of the motion capture device.

At block S202, the target posture information of the device coordinate system relative to the world coordinate system is determined based on the light spot image.

Optionally, in the present disclosure, the head-mounted display device may calculate, by using a preset calculation rule, the target posture information of the device coordinate system relative to the world coordinate system based on the light spot image.

Since the pose information of the head-mounted coordinate system relative to the world coordinate system is known, the Perspective-n-Point (PnP) algorithm in computer vision can be used to calculate pose information of the device coordinate system relative to the world coordinate system based on n points (n points corresponding to the light spots in the light spot image). Therefore, in the present disclosure, in the case that the deployment position of the light emitting unit on the motion capture device is known, the pose estimation algorithm can be used to calculate the target posture information of the device coordinate system relative to the world coordinate system based on the light spot image collected through the camera. Then, posture information can be extracted from the target posture information, and the extracted posture information can be determined as the target posture information of the device coordinate system relative to the world coordinate system.

In general, the PnP algorithm may include: a P3P algorithm, a P5P algorithm, and other algorithms. In addition, the above P3P algorithm is to calculate pose information of the device coordinate system relative to the world coordinate system based on three points. The above P5P algorithm is to calculate pose information of the device coordinate system relative to the world coordinate system based on five points. Therefore, in the present disclosure, the number of the light spots on the motion capture device is at least three, when the target posture information of the device coordinate system relative to the world coordinate system is calculated based on the light spot image collected through the camera, different PnP algorithms can be used based on the number of light spots in the light spot image.

The number of light spots on the motion capture device may be the same as the number of light emitting units on the motion capture device, or may be different from the number of light emitting units on the motion capture device. When the number of light spots on the motion capture device is the same as the number of light emitting units, the number of light emitting units on the motion capture device is at least three. When the number of light spots on the motion capture device is not equal to the number of light emitting units, the number of light emitting units on the motion capture device is at least one.

In some alternative embodiments, considering that the motion capture device may include the motion capture device body or the accessory rigidly connected to the motion capture device body (such as a base). In this case, in an optional implementation, when there are at least three light emitting units on the motion capture device, the at least three light emitting units may be distributed in the housing of the motion capture device body in a preset deployment mode. Alternatively, the one light emitting unit is installed in the base of the motion capture device body in the preset deployment mode, and the remaining light emitting units are installed in the base in the preset deployment mode. Alternatively, the one light emitting unit is installed in the base in the preset deployment mode, and the remaining light emitting units are installed in the base of the motion capture device body in the preset deployment mode. The preset deployment mode may be flexibly set based on the shape of the motion capture device body and the base, which is not limited herein.

At block S203, the motion capture device is calibrated based on the target posture information.

After the target posture information of the device coordinate system relative to the world coordinate system is determined, the posture of the motion capture device relative to the world may be calibrated based on the target posture information, such that the subsequent body motion collected by the calibrated motion capture device can be more accurate.

In some optional embodiments, the posture of the motion capture device relative to the world is calibrated. Alternatively, the initial posture of the motion capture device relative to the world can be calibrated, or the real-time posture of the motion capture device relative to the world can be calibrated, which is not limited in the present disclosure.

With the method for calibrating a motion capture device according to the embodiments of the present disclosure, by collecting the light spot image of the light emitting unit on the motion capture device worn on the limb of the human body through the camera, the target posture information of the device coordinate system relative to the world coordinate system is determined based on the light spot image, and then the motion capture device is calibrated based on the target posture information. In the present disclosure, by using the light spot image of the light emitting unit on the motion capture device to calibrate the motion capture device, the difficulty of calibrating the motion capture device can be effectively reduced, the calibration time can be shortened, the calibration error can be reduced, the calibration precision of the motion capture device can be improved. Thus, the calibrated motion capture device can improve the limb motion capture effect, and provide conditions for improving the accuracy of the human posture restoration.

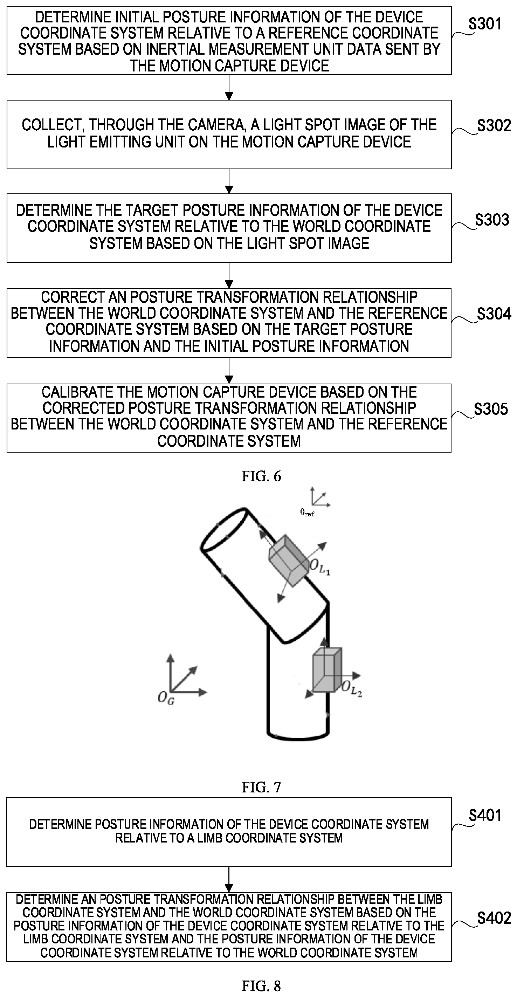

The method for calibrating a motion capture device according to embodiments of the present disclosure will further be described below with reference to FIG. 6. As illustrated in FIG. 6, the method includes the followings.

At block S301, initial posture information of the device coordinate system relative to a reference coordinate system is determined based on inertial measurement unit data sent by the motion capture device.

The reference coordinate system may be a geographic coordinate system, or any user-defined coordinate system which is different from the world coordinate system. In the present disclosure, the roll angle (also referred to as rolling angle) and the pitch angle in the reference coordinate system are the same as the roll angle and the pitch angle in the world coordinate system.

The reference coordinate system may be denoted as *ref*. Moreover, when the reference coordinate system is the geographic coordinate system, the geographic coordinate system may be a north-east geocoordinate system.

In this embodiment of the present disclosure, the relationship between the world coordinate system, the reference coordinate system and the device coordinate system may be illustrated in FIG. 7. $O_G$ is the world coordinate system, $O_{ref}$ is the reference coordinate system, $O_{L1}$ is the coordinate system of the motion capture device worn on the thigh of the lower limb of the human body, and $O_{L2}$ is the coordinate system of another motion capture device worn on the calf associated with the above thigh.

In some optional embodiments, when the motion capture device is in the working state, the inertial sensor (i.e., the inertial measurement unit) on the motion capture device will send the inertial measurement unit data to the head-mounted display device in real time, such that the head-mounted display device calculates, based on the inertial measurement unit data, the initial posture information of the device coordinate system relative to the reference coordinate system, i.e., the posture transformation relationship between the device coordinate system and the reference coordinate system.

The inertial measurement unit data sent by the motion capture device may include accelerometer data, gyroscope data, and magnetometer data. Therefore, in the present disclosure, by using an algorithm such as a preset posture solution algorithm, such as a complementary filter algorithm, the initial posture information of the device coordinate system relative to the reference coordinate system can be determined based on the accelerometer data, the gyroscope data, and the magnetometer data sent by the motion capture device.

The inertial measurement unit on the motion capture device sends the inertial measurement unit data to the head-mounted display device. This may be done when the camera on the head-mounted display device collects the light spot image, the motion capture device starts to acquire the inertial measurement unit data through the inertial measurement unit and sends the inertial measurement unit data; or, it may also be started at any moment before the camera on the head-mounted display device collects the light spot image, and then the motion capture device continuously acquires the inertial measurement unit data through the inertial measurement unit, and sends the inertial measurement unit data, which is not limited in the present disclosure.

In the present disclosure, the number of initial posture information of the device coordinate system relative to the reference coordinate system determined based on the inertial measurement unit data sent by the motion capture device can be one or more. Specifically, when the inertial sensor on the motion capture device sends the inertial measurement unit data once, the number of the calculated initial posture information of the device coordinate system relative to the reference coordinate system is one. When the inertial sensor on the motion capture device sends the inertial measurement unit data multiple times, the number of the calculated initial posture information of the device coordinate system relative to the reference coordinate system is multiple. The multiple initial posture information may be understood as that each time the inertia measurement unit data is received, an initial posture information of the device coordinate system relative to the reference coordinate system can be calculated.

In addition, the multiple initial posture information may be the same or different, which is determined based on the motion state of the user.

In the present disclosure, multiple may be understood as two or more, i.e., at least two.

Optionally, in the present disclosure, the initial posture information of the *i*-th device coordinate system relative to the reference coordinate system may be represented as $^{ref}R_{L_i}^{t1}$, where *ref* represents the reference coordinate system, t1 represents the t1-th moment, $L_i$ represents the i-th motion capture device coordinate system, i.e., the *i*-th device coordinate system, and $R$ represents the posture information.

At block S302, the light spot image of the light emitting unit on the motion capture device is collected through the camera.

At block S303, the target posture information of the device coordinate system relative to the world coordinate system is determined based on the light spot image, the device coordinate system is the coordinate system of the motion capture device.

At block S304, the posture transformation relationship between the world coordinate system and the reference coordinate system is corrected based on the target posture information and the initial posture information.

In some optional embodiments, in a process in which the camera on the head-mounted display device collects the light spot image, the motion capture device may synchronously send the inertial measurement unit data to the head-mounted display device. Therefore, in the present disclosure, the posture transformation relationship between the world coordinate system and the reference coordinate system may be corrected based on the target posture information determined by the light spot image at the same moment and the initial posture information determined by the inertial measurement unit data. Optionally, it can be achieved through the following formula (1):

$$ {}^{G}R_{ref} = {}^{G}R_{L_i}^{t1} * \left( {}^{ref}R_{L_i}^{t1} \right)^{-1} \quad \ldots\ldots(1) $$

where ${}^{G}R_{ref}$ represents the corrected posture transformation relationship between the world coordinate system and the reference coordinate system, ${}^{G}R_{L_i}^{t1}$ represents the target posture information of the $i$-th device coordinate system relative to the world coordinate system at moment t1, ${}^{ref}R_{L_i}^{t1}$ represents the initial posture information of the $i$-th device coordinate system relative to the reference coordinate system at moment t1, $ref$ represents the reference coordinate system, $L_i$ represents the coordinate system of the $i$-th motion capture device, i.e., the $i$-th device coordinate system, $G$ represents the world coordinate system, $R$ represents the posture information, and -1 represents the inversion.

The posture transformation relationship between the world coordinate system and the reference coordinate system can be represented by Euler angles. The Euler angles may include a heading angle, a pitch angle, and a roll angle. Therefore, in the present disclosure, correcting the posture transformation relationship between the world coordinate system and the reference coordinate system based on the target posture information and the initial posture information may be selected as correcting the heading angle, the pitch angle and/or the roll angle between the modified world coordinate system and the reference coordinate system.

It may be understood that the heading angle, the pitch angle, and/or the roll angle may be the heading angle; or the pitch angle; or the roll angle; or the heading angle and the pitch angle; or the heading angle and the roll angle; or the pitch angle and the roll angle; or the heading angle, a pitch angle and a roll angle, which is not limited in the present disclosure.

In the present disclosure, the heading angle may be understood as the angle at which the motion capture device rotates about the X-axis, and the X-axis is in the direction perpendicular to the ground. The pitch angle may be understood as the angle at which the motion capture device rotates around the Y-axis, and the roll angle may be understood as the angle at which the motion capture device rotates around the Z-axis.

In some optional embodiments, considering that the posture transformation relationship between the world coordinate system and the reference coordinate system is represented by the Euler angle, the pitch angle and the roll angle in the world coordinate system and the reference coordinate system are the same, and only the heading angle parameter has a deviation. Therefore, in the present disclosure, correcting the posture transformation relationship between the world coordinate system and the reference coordinate system based on the target posture information and the initial posture information may refer to correcting the heading angle parameter in the posture transformation relationship between the world coordinate system and the reference coordinate system based on the target posture information and the initial posture information.

In the present disclosure, correcting the heading angle in the posture transformation relationship between the world coordinate system and the reference coordinate system may include: correcting the heading angle transformation relationship in the posture transformation relationship between the world coordinate system and the reference coordinate system based on the target posture information and the initial posture information.

At block S305, the motion capture device is calibrated based on the corrected posture transformation relationship between the world coordinate system and the reference coordinate system.

Optionally, in the present disclosure, after the posture transformation relationship between the world coordinate system and the reference coordinate system is corrected, new target posture information with high accuracy between the device and the world coordinate system can be determined based on the corrected posture transformation relationship and the initial posture information of the device coordinate system relative to the reference coordinate system. Further, based on the new target posture information, the initial posture or the real-time posture of the motion capture device can be calibrated, such that the calibration accuracy of the motion capture device may be further improved.

In some optional embodiments, based on the corrected posture transformation relationship and the initial posture information of the device coordinate system relative to the reference coordinate system, the new target posture information of the device relative to the world coordinate system can be determined, which may be achieved by the following formula (2):

$$ {}^{G}R_{ref} = {}^{G}R_{L_i}^{t1} * \left( {}^{ref}R_{L_i}^{t1} \right)^{-1} \quad \ldots\ldots\ldots\ldots(2) $$

where ${}^{G}R_{L_i}^{t1'}$ represents the new target posture information of the i-th device coordinate system relative to the world coordinate system at any moment after the moment t1, ${}^{G}R_{ref}$ represents the corrected posture transformation relationship between the world coordinate system and the reference coordinate system, $^{ref}R_{L_i}^{t1'}$ represents the initial posture information of the $i$-th device coordinate system relative to the reference coordinate system at any moment after the moment t1, $ref$ represents the reference coordinate system, $L_i$ represents the coordinate system of the $i$-th motion capture device, i.e., the $i$-th device coordinate system, $G$ represents the world coordinate system, and $R$ represents the posture information.

With the method for calibrating a motion capture device according to the embodiments of the present disclosure, by collecting the light spot image of the light emitting unit on the motion capture device worn on the limb of the human body through the camera, the target posture information of the device coordinate system relative to the world coordinate system is determined based on the light spot image, and then the motion capture device is calibrated based on the target posture information. In the present disclosure, by using the light spot image of the light emitting unit on the motion capture device to calibrate the motion capture device, the difficulty of calibrating the motion capture device can be effectively reduced, the calibration time can be shortened, the calibration error can be reduced, the calibration precision of the motion capture device can be improved. Thus, the calibrated motion capture device can improve the limb motion capture effect, and provide conditions for improving the accuracy of the human posture restoration. In addition, by determining the initial posture information of the device coordinate system relative to the reference coordinate system, and correcting the posture transformation relationship between the world coordinate system and the reference coordinate system based on the target posture information and the initial posture information, and then calibrating the posture of the motion capture device relative to the world based on the corrected posture transformation relationship between the world coordinate system and the reference coordinate system, the calibration error can be further reduced, and the calibration accuracy of the motion capture device can be improved.

In an optional implementation scenario, in the present disclosure, after the motion capture device is calibrated, the posture transformation relationship between the limb coordinate system and the world coordinate system may be further determined, and then the posture of the limb corresponding to the motion capture device in the world coordinate system can be determined based on the posture transformation relationship. The process of determining the posture transformation relationship between the limb coordinates and the world coordinate system and determining the posture of the limb in the world coordinate system based on the posture transformation relationship according to embodiments of the present disclosure will be described below with reference to FIG. 8.

As illustrated in FIG. 8, the method includes the followings.

At block S401, the posture information of the device coordinate system relative to the limb coordinate system is determined.

In the embodiments of the present disclosure, the limb coordinate system refers to the limb coordinate system of the limb of the human body, the limb coordinate system may be expressed as $B_i$, where B stands for Body, and $i$ is identification information of the limb corresponding to the limb coordinate system. The identification information may be any information that can uniquely determine the identity of the limb, such as the number or the name of important bone of the human body, which is not limited herein.

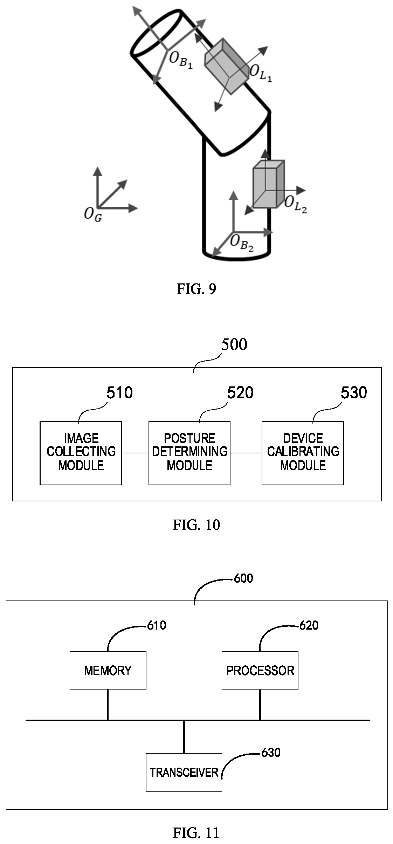

As an optional implementation, the relationship between the device coordinate system, the world coordinate system, and the limb coordinate system may be exemplarily illustrated in FIG. 9. $O_G$ represents the world coordinate system, $O_{B1}$ represents the limb coordinate system of the thigh, $O_{B2}$ represents the limb coordinate system of the calf associated with the thigh, $O_{L1}$ represents the device coordinate system of the motion capture device worn on the thigh, and $O_{L2}$ represents the device coordinate system of another motion capture device worn on the calf.

Optionally, in the present disclosure, before the posture information of the device coordinate system relative to the limb coordinate system is determined, the user may be first guided to make a preset calibration motion (or a preset calibration posture) and maintain it for a certain time, to ensure that the user's face and the limb wearing the motion capture device have a certain relative posture through the preset calibration motion. The preset calibration motion may be, but is not limited to: T-pose, N-pose, other motions that can ensure that the user's face, chest, and lower limbs (i.e., legs) face in the same direction, or other motions that ensure that the user's face and the limb wearing the motion capture device have a certain relative posture. Then, the posture information of the device coordinate system relative to the limb coordinate system is determined based on the preset motion. In the present disclosure, the certain time may be flexibly set based on actual calculation requirements, such as 1 second, 2 seconds, or 3 seconds, etc., which is not limited in the present disclosure.

It should be noted that the T-pose may be understood as the posture where both arms extended horizontally to the sides to form a T shape. The N-pose may be understood as the standing-at-attention posture.

In some optional implementations, determining the posture information of the device coordinate system relative to the limb coordinate system may include the followings.

At step 1, in a preset calibration posture, the posture transformation relationship between the limb coordinate system and the head-mounted coordinate system is determined, and the posture information of the head-mounted coordinate system relative to the world coordinate system is determined, the head-mounted coordinate system is the coordinate system of the head-mounted display device.

The preset calibration posture may be understood as the preset calibration motion, such as T-pose, N-pose, or other motions that can ensure that the face, the chest, and the lower limb (i.e., the leg) of the user face the same direction, or other motions that ensure that the user's face and the limb wearing the motion capture device have a certain relative posture.

In some optional embodiments, after the user makes the preset calibration posture, the positions of the human body limbs and the human head are fixed. Correspondingly, the posture transformation relationship between the limb coordinate system and the head-mounted coordinate system is also fixed. That is, at the moment when the user makes the preset motion, the posture transformation relationship between the limb coordinate system and the head-mounted coordinate system is a known quantity, and the known quantity is usually a constant, and the constant is a unit matrix.

In some implementations, since the camera on the head-mounted display device can collect the surrounding environment data in real time, the head-mounted display device can determine, by using the computer vision SLAM algorithm, the posture information of the head-mounted display device in real time based on the surrounding environment data collected through the camera. Therefore, in the present disclosure, by using the computer vision SLAM algorithm and based on the surrounding environment data collected through the camera, the posture information of the head-mounted coordinate system relative to the world coordinate system can be determined, and the determining process can be referred to the technology in the related art, and details are not described herein again.

At step 2, the posture information of the device coordinate system relative to the limb coordinate system is determined based on the posture transformation relationship between the limb coordinate system and the head-mounted coordinate system, the posture information of the head-mounted coordinate system relative to the world coordinate system, and the posture information of the device coordinate system relative to the world coordinate system.

Optionally, the posture information of the device coordinate system relative to the limb coordinate system may be determined by the following formula (3):

$$^{B_i}R_{L_i} = {}^{B_i}R_{HMD} * ({}^{G}R_{HMD})^{-1} * {}^{G}R_{L_i}^{t2} \quad ......(3)$$

where $^{B_i}R_{L_i}$ represents the posture information of the $i$-th device coordinate system relative to the $i$-th limb coordinate system at the moment t2, $^{B_i}R_{HMD}$ represents the posture transformation relationship between the $i$-th limb coordinate system and the head-mounted coordinate system at the moment t2, $^{G}R_{HMD}$ represents the posture information of the head-mounted coordinate system relative to the world coordinate system at the moment t2, $^{G}R_{L_i}^{t2}$ represents the posture information of the $i$-th device coordinate system relative to the world coordinate system at the moment t2, $B_i$ represents the $i$-th limb coordinate system, $L_i$ represents the coordinate system of the $i$-th motion capture device, i.e., the $i$-th device coordinate system, $G$ represents the world coordinate system, the *HMD* represents the head-mounted coordinate system, $R$ represents the posture information, and -1 represents the inversion.

$^{G}R_{L_i}^{t2} = {}^{G}R_{ref} * {}^{ref}R_{L_i}^{t2}$, where $^{G}R_{L_i}^{t2}$ represents the posture information of the $i$-th device coordinate system relative to the world coordinate system at moment t2, $^{G}R_{ref}$ represents the corrected posture transformation relationship between the world coordinate system and the reference coordinate system, $^{ref}R_{L_i}^{t2}$ represents the initial posture information of the device coordinate system relative to the reference coordinate system at moment t2, *ref* represents the reference coordinate system, $L_i$ represents the coordinate system of the $i$-th motion capture device, i.e., the $i$-th device coordinate system, $G$ represents the world coordinate system, and R represents the posture information.

It should be understood that the above t1 refers to the time of collecting the image or the light spot image of the motion capture device, or the time of collecting the image or the light spot image of the motion capture device and completing the calibration of the motion capture device, t2 refers to the time of determining the posture of the device coordinate system relative to the limb coordinate system under the preset calibration posture, and t2 may be later than t1, i.e., t1 < t2.

The corrected posture transformation relationship between the world coordinate system and the reference coordinate system has been determined based on the block S304 in the foregoing embodiment, and the posture transformation relationship is fixed during the calibration, or after the last calibration and before the next calibration. In addition, the inertial measurement unit in the motion capture device sends the inertial measurement unit data in real time, thus the initial posture information of the device coordinate system relative to the reference coordinate system at the moment t2 can be calculated based on the received inertial measurement unit data. Further, in the present disclosure, based on the initial posture information of the device coordinate system relative to the reference coordinate system at the moment t2 and the corrected posture transformation relationship between the world coordinate system and the reference coordinate system, the posture information of the $i$-th device coordinate system relative to the world coordinate system at moment t2 when the user makes the preset calibration posture can be determined.

The posture information of the device coordinate system relative to the world coordinate system is determined based on the initial posture information of the device coordinate system relative to the reference coordinate system at the moment t2 and the corrected posture transformation relationship between the world coordinate system and the reference coordinate system, details may be referred to the foregoing embodiment of block S305, and details are not described herein again.

At block S402, a posture transformation relationship between the limb coordinate system and the world coordinate system is determined based on the posture information of the device coordinate system relative to the limb coordinate system and the posture information of the device coordinate system relative to the world coordinate system.

In some optional implementations, the posture transformation relationship between the limb coordinate system and the world coordinate system may be determined by the following formula (4):

$$^{G}R_{B_i} = {}^{G}R_{L_i} * \left( {}^{B_i}R_{L_i} \right)^{-1} \ldots\ldots\ldots\ldots(4)$$

where ${}^{G}R_{B_i}$ represents the posture transformation relationship between the limb coordinate system and the world coordinate system at the moment t2, ${}^{G}R_{L_i}$ represents the posture information of the $i$-th device relative to the world coordinate system at the moment t2, ${}^{B_i}R_{L_i}$ represents the posture information of the $i$-th device coordinate system relative to the $i$-th limb coordinate system at the moment t2, $B_i$ represents the $i$-th limb coordinate system, $L_i$ represents the coordinate system of the $i$-th motion capture device, i.e., the $i$-th device coordinate system, $G$ represents the world coordinate system, $R$ represents the posture information, and -1 represents the inversion.

Further, the limb coordinate system may be calibrated based on the posture transformation relationship between the limb coordinate system and the world coordinate system.

It should be understood that the posture transformation relationship between the limb coordinate system and the world coordinate system may be understood as the posture information of the limb coordinate system relative to the world coordinate system, and the posture information may represent the posture of the limb in the world coordinate system.

In some optional implementations, in the present disclosure, the order of determining the posture information of the device coordinate system relative to the limb coordinate system and calibrating the motion capture device may be as follows: the motion capture device is calibrated first, and then the posture information of the device coordinate system relative to the limb coordinate system is determined, and then the posture information of the limb coordinate system relative to the world coordinate system is obtained, thereby achieving the corresponding limb motion capture function; or, the posture information of the device coordinate system relative to the limb coordinate system is determined first, and then the motion capture device is calibrated, and then the posture information of the limb coordinate system relative to the world coordinate system is obtained, thereby achieving the corresponding limb motion capture function, which is not limited in the present disclosure.

In the present disclosure, when the posture information of the device coordinate system relative to the limb coordinate system is determined first, and then the motion capture device is calibrated, the posture information of the device coordinate system relative to the limb coordinate system at the moment t2 is cached first, and then when performing the calibration operation, the motion capture device is calibrated based on the cached posture information of the device coordinate system relative to the limb coordinate system at the moment t2.

The posture information of the device coordinate system relative to the limb coordinate system may be determined by the following formula (5):

$$^{B_i}R_{L_i} = {}^{B_i}R_{HMD} * ({}^{G}R_{HMD})^{-1} * {}^{G}R_{ref} * {}^{ref}R_{L_i}^{t2} \ldots\ldots(5)$$

where ${}^{B_i}R_{L_i}$ represents the posture information of the $i$-th device coordinate system relative to the $i$-th limb coordinate system at the moment t2, ${}^{B_i}R_{HMD}$ represents the posture transformation relationship between the $i$-th limb coordinate system and the head-mounted coordinate system at the moment t2, the posture transformation relationship is a fixed value when the user's limb makes the preset calibration posture, and the fixed value is usually a unit matrix, ${}^{G}R_{HMD}$ represents the posture information of the head-mounted coordinate system relative to the world coordinate system at the moment t2, ${}^{G}R_{ref}$ represents the corrected posture transformation relationship between the world coordinate system and the reference coordinate system at the moment t2, ${}^{ref}R_{L_i}^{t2}$ represents the initial posture information of the $i$-th device coordinate system relative to the reference coordinate system at the moment t2, $B_i$ represents the $i$-th limb coordinate

system, $L_i$ represents the coordinate system of the $i$-th motion capture device, i.e., the $i$-th device coordinate system, $G$ represents the world coordinate system, the *HMD* represents the head-mounted coordinate system, *ref* represents the reference coordinate system, $R$ represents the posture information, and -1 represents the inversion.

It should be noted that, in the present disclosure, the limb may be considered to be fixed in the limb coordinate system, and the pose of the limb coordinate system relative to the world may be equivalent to the pose of the limb relative to the world coordinate system.

Moreover, the motion capture device may be fixed to the motion capture device coordinate system, and the relationship between the motion capture device coordinate system and the reference coordinate system or the world coordinate system is equivalent to the relationship between the motion capture device and the reference coordinate system or the world coordinate system.

With the method for calibrating a motion capture device according to the embodiments of the present disclosure, by collecting the light spot image of the light emitting unit on the motion capture device worn on the limb of the human body through the camera, the target posture information of the device coordinate system relative to the world coordinate system is determined based on the light spot image, and then the motion capture device is calibrated based on the target posture information. In the present disclosure, by using the light spot image of the light emitting unit on the motion capture device to calibrate the motion capture device, the difficulty of calibrating the motion capture device can be effectively reduced, the calibration time can be shortened, the calibration error can be reduced, the calibration precision of the motion capture device can be improved. Thus, the calibrated motion capture device can improve the limb motion capture effect, and provide conditions for improving the accuracy of the human posture restoration. In addition, in the present disclosure, the limb coordinate system is calibrated based on the posture transformation relationship between the limb coordinate system and the world coordinate system, and the posture of the limb in the world coordinate system is determined based on the calibrated limb coordinate system, thereby improving the accuracy and correctness of determining the posture of the limb of the human body in the world coordinate system, and improving the capturing effect of limb motion.

The apparatus for calibrating a motion capture device according to embodiments of the present disclosure will be described below with reference to FIG. 10. FIG. 10 is a schematic block diagram of an apparatus for calibrating a motion capture device according to embodiments of the present disclosure.

The motion capture device is worn on the limb of the human body, the device is configured on the head-mounted display device, and the head-mounted display device includes a camera. As illustrated in FIG. 10, the apparatus 500 for calibrating the motion capture device includes an image collecting module 510, a posture determination module 520 and a device calibrating module 530.

The image collecting module 510 is configured to collect an image of the motion capture device through the camera.

The posture determining module 520 is configured to determine target posture information of a device coordinate system relative to a world coordinate system based on the image of the motion capture device, where the device coordinate system is a coordinate system of the motion capture device.

The device calibrating module 530 is configured to calibrate the motion capture device based on the target posture information.

In an optional implementation of the embodiments of the present disclosure, the posture determining module 520 is further configured to: extract an image feature point from the image of the motion capture device; and determine the target posture information of the device coordinate system relative to the world coordinate system based on the image feature point.

In an optional implementation of the embodiments of the present disclosure, the motion capture device includes a light emitting unit, and the image collecting module 510 is further configured to collect a light spot image of the light emitting unit on the motion capture device through the camera.

Correspondingly, the posture determining module 520 is further configured to determine the target posture information of the device coordinate system relative to the world coordinate system based on the light spot image.

In an optional implementation of the embodiments of the present disclosure, the posture determining module 520 is further configured to: determine, by using a pose estimation algorithm, target pose information of the device coordinate system relative to the world coordinate system based on the light spot image; and extract posture information from the target pose information, and determine the posture information as the target posture information of the device coordinate system relative to the world coordinate system.

In an optional implementation of the embodiments of the present disclosure, the apparatus 500 further includes a first determining module. The first determining module is configured to determine initial posture information of the device coordinate system relative to a reference coordinate system based on the inertial measurement unit data sent by the motion capture device.

Correspondingly, the device calibrating module 530 is further configured to: correct a posture transformation relationship between the world coordinate system and the reference coordinate system based on the target posture information and the initial posture information; and calibrate the motion capture device based on the corrected posture transformation relationship between the world coordinate system and the reference coordinate system.

In an optional implementation of the embodiments of the present disclosure, the device calibrating module 530 is further configured to: correct a heading angle in the posture transformation relationship between the world coordinate system and the reference coordinate system.

In an optional implementation of the embodiments of the present disclosure, the inertial measurement unit data includes accelerometer data, gyroscope data, and magnetometer data. The first determining module is further configured to determine, by using a complementary filtering algorithm, the initial posture information of the device coordinate system relative to the reference coordinate system based on the accelerometer data, the gyroscope data and the magnetometer data sent by the motion capture device.

In an optional implementation of the embodiments of the present disclosure, the apparatus 500 further includes a second determining module and a third determining module. The second determining module is configured to determine posture information of the device coordinate system relative to a limb coordinate system. The third determining module is configured to determine a posture transformation relationship between the limb coordinate system and the world coordinate system based on the posture information of the device coordinate system relative to the limb coordinate system and the posture information of the device coordinate system relative to the world coordinate system.

In an optional implementation of the embodiments of the present disclosure, the second determining module is further configured to: determine, under a preset calibration posture, a posture transformation relationship between the limb coordinate system and a head-mounted coordinate system, and posture information of the head-mounted coordinate system relative to the world coordinate system, the head-mounted coordinate system being a coordinate system of the head-mounted display device; and determine the posture information of the device coordinate system relative to the limb coordinate system based on the posture transformation relationship between the limb coordinate system and the head-mounted coordinate system, the posture information of the head-mounted coordinate system relative to the world coordinate system, and the posture information of the device coordinate system relative to the world coordinate system.

In an optional implementation of the embodiments of the present disclosure, the second determining module is further configured to determine the posture information of the device coordinate system relative to the world coordinate system based on the corrected posture transformation relationship between the world coordinate system and the reference coordinate system.

In an optional implementation of the embodiments of the present disclosure, the number of spots on the motion capture device is at least three.

In an optional implementation of the embodiments of the present disclosure, the apparatus further includes a display module. The display module is configured to display an image perspective view, and displaying, in the image perspective view, guidance information for guiding a user to place the motion capture device in the image perspective view.

With the apparatus for calibrating a motion capture device according to the embodiments of the present disclosure, by collecting the image of the motion capture device worn on the limb of the human body through the camera, the target posture information of the device coordinate system relative to the world coordinate system is determined based on the image of the motion capture device, and then the motion capture device is calibrated based on the target posture information. In the present disclosure, by using the image of the motion capture device to calibrate the motion capture device, the difficulty of calibrating the motion capture device can be effectively reduced, the calibration time can shortened, the calibration error can be reduced, and the calibration precision of the motion capture device can be improved. Thus, the calibrated motion capture device can improve the limb motion capture effect, and provide conditions for improving the accuracy of the human posture restoration.

It should be understood that the apparatus embodiments and the foregoing method embodiments may correspond to each other, and similar descriptions may refer to the method embodiments. To avoid repetition, details are not described herein again. Specifically, the apparatus 500 illustrated in FIG. 10 may perform the method embodiment corresponding to FIG. 3, and the foregoing and other operations and/or functions of each module in the apparatus 500 are respectively used to implement corresponding operations in each method in FIG. 3, and for the sake of brevity, they are not described in detail here.

The apparatus 500 according to the embodiments of the present disclosure is described above from the perspective of functional modules in conjunction with the accompanying drawings. It should be understood that the functional module may be implemented in the form of hardware, or may be implemented by using instructions in the form of software, or may be implemented by combining hardware and software modules. Specifically, steps in the method embodiments of the first aspect in the embodiments of the present disclosure may be completed by using an integrated logic circuit of hardware in a processor and/or an instruction in a form of software, and the steps in the method based on the first aspect disclosed in the embodiments of the present disclosure may be directly reflected as execution of a hardware decoding processor, or performed by combining hardware and software modules in a decoding processor. Optionally, the software module may be located in a mature storage medium in the art such as a random-access memory, a flash memory, a read-only memory, a programmable read-only memory, an electrically erasable programmable memory, a register, and the like. The storage medium is located in the memory, the processor reads information in the memory, and completes the steps in the foregoing method embodiment of the first aspect in combination with hardware of the storage medium.

FIG. 11 is a schematic block diagram of an electronic device according to embodiments of the present disclosure. As illustrated in FIG. 11, the electronic device 600 may include a memory 610 and a processor 620.

The memory 610 is configured to store a computer program, and transmit the program code to the processor 620. In other words, the processor 620 may invoke and run the computer program from the memory 610, to implement the method for calibrating a motion capture device according to embodiments of the present disclosure.

For example, the processor 620 may be configured to execute method for calibrating a motion capture device of the method embodiments based on the instructions in the computer program.

In some embodiments of the present disclosure, the processor 620 may include, but is not limited to: a general-purpose processor, a digital signal processor (DSP), an application specific integrated circuit (ASIC), a field programmable gate array (FPGA), another programmable logic device, a discrete gate or transistor logic device, a discrete hardware component, or the like.

In some embodiments of the present disclosure, the memory 610 includes, but is not limited to: volatile memory and/or non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random-access memory (RAM), which serves as an external cache. By way of example and not limitation, many forms of RAM are available, such as Static Random Access Memory (SRAM), Dynamic Random Access Memory (DRAM), Synchronous Dynamic Random Access Memory (SDRAM), Double Data Rate SDRAM (DDR SDRAM), Enhanced SDRAM (ESDRAM), Synch link DRAM (SLDRAM), and Direct Rambus RAM (DR RAM).

In some embodiments of the present disclosure, the computer program may be divided into one or more modules, and the one or more modules are stored in the memory 610 and executed by the processor 620 to complete the method for calibrating a motion capture device provided in the present disclosure. The one or more modules may be a series of computer program instruction segments capable of completing a specific function, and the instruction segment is used to describe an execution process of the computer program in the electronic device.

As illustrated in FIG. 11, the electronic device 600 may further include a transceiver 630.

The transceiver 630 may be connected to the processor 620 or the memory 610.

The processor 620 may control the transceiver 630 to communicate with another device, specifically, may send information or data to another device, or receive information or data sent by another device. The transceiver 630 may include a transmitter and a receiver. The transceiver 630 may further include an antenna, and there may be one or more antennas.

It should be understood that, each component in the electronic device is connected to the bus system, where the bus system includes, in addition to a data bus, a power bus, a control bus, and a status signal bus.

The present disclosure further provides a computer storage medium, having a computer program stored thereon, and when the computer program is executed by a computer, causing the computer to perform the method in the foregoing method embodiments.

Embodiment of the present disclosure further provide a computer program product including program instructions that, when executed on an electronic device, cause the electronic device to perform the method in the foregoing method embodiments.

When implemented using software, it may be implemented in whole or in part in the form of a computer program product. The computer program product includes one or more computer instructions. When the computer program instructions are loaded and executed on a computer, the processes or functions based on the embodiments of the present disclosure are all or partially generated. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from a website site, a computer, a server, or a data center to another website site, computer, server, or data center over a wired (e.g., coaxial cable, optical fiber, digital subscriber line (DSL)) or wireless (e.g., infrared, wireless, microwave, etc. ). The computer-readable storage medium may be any available medium that can be accessed by a computer or a data storage device such as a server or a data center integrated with one or more available media. The usable medium may be a magnetic medium (for example, a floppy disk, a hard disk, a magnetic tape), an optical medium (for example, a digital video disc (DVD)), a semiconductor medium (for example, a solid-state disk (SSD)), or the like.

Those of ordinary skill in the art will appreciate that the modules and algorithm steps of the examples described in connection with the embodiments disclosed herein can be implemented in electronic hardware, or in combination of computer software and electronic hardware. Whether these functions are performed in hardware or software depends on the specific application and design constraints of the technical solutions. Those skilled in the art may use different methods for each particular application to implement the described functionality, but such implementations should not be considered to be beyond the scope of the present disclosure.

In the several embodiments provided in the present disclosure, it should be understood that the disclosed systems, apparatuses, and methods may be implemented in other manners. For example, the apparatus embodiments described above are merely illustrative, for example, the division of the modules is merely a logical function division, and in actual implementation, there may be another division manner, for example, multiple modules or components may be combined or may be integrated into another system, or some features may be ignored, or not executed. Alternatively, the mutual coupling or direct coupling or communication connection illustrated or discussed may be an indirect coupling or communication connection through some interfaces, devices, or modules, and may be in electrical, mechanical, or other forms.

The modules described as separate components may or may not be physically separate, and the components displayed as modules may or may not be physical modules, that is, may be located in one place, or may be distributed to multiple network units. Some or all of the modules may be selected based on actual needs to achieve the purpose of the solution of this embodiment. For example, each functional module in the embodiments of the present disclosure may be integrated into one processing module, or may be separately physically present by each module, or may be integrated in one module by two or more modules.

The foregoing descriptions are only specific implementations of the present disclosure, but the protection scope of the present disclosure is not limited thereto, and any person skilled in the art may easily conceive of changes or replacements within the technical scope of the present disclosure, and should be covered within the protection scope of the present disclosure. Therefore, the protection scope of the present disclosure should be based on the protection scope of the claims.

**Claims**

1. A method for calibrating a motion capture device, comprising:

   collecting an image of the motion capture device through a camera comprised in a head-mounted display device, the motion capture device being worn on a limb of a human body, and the method being applied to the head-mounted display device;
   determining target posture information of a device coordinate system relative to a world coordinate system based on the image of the motion capture device, the device coordinate system being a coordinate system of the motion capture device; and
   calibrating the motion capture device based on the target posture information.

2. The method of claim 1, wherein the determining target posture information of a device coordinate system relative to a world coordinate system based on the image of the motion capture device comprises:

   extracting an image feature point from the image of the motion capture device; and
   determining the target posture information of the device coordinate system relative to the world coordinate system based on the image feature point.

3. The method of claim 1, wherein the motion capture device comprises a light emitting unit, and collecting the image of the motion capture device through the camera comprises:

   collecting, through the camera, a light spot image of the light emitting unit on the motion capture device; and
   wherein the determining target posture information of a device coordinate system relative to a world coordinate system based on the image of the motion capture device comprises:
   determining the target posture information of the device coordinate system relative to the world coordinate system based on the light spot image.

4. The method of claim 3, wherein the determining the target posture information of the device coordinate system relative to the world coordinate system based on the light spot image comprises:

   determining, by using a pose estimation algorithm, target pose information of the device coordinate system relative to the world coordinate system based on the light spot image; and
   extracting posture information from the target pose information, and determining the posture information as the target posture information of the device coordinate system relative to the world coordinate system.

5. The method of claim 3, further comprising:

determining initial posture information of the device coordinate system relative to a reference coordinate system based on inertial measurement unit data sent by the motion capture device; and

wherein the calibrating the motion capture device comprises:

correcting a posture transformation relationship between the world coordinate system and the reference coordinate system based on the target posture information and the initial posture information; and calibrating the motion capture device based on the corrected posture transformation relationship between the world coordinate system and the reference coordinate system.

6. The method of claim 5, wherein the correcting a posture transformation relationship between the world coordinate system and the reference coordinate system comprises:
correcting a heading angle in the posture transformation relationship between the world coordinate system and the reference coordinate system.

7. The method of claim 5, wherein the inertial measurement unit data comprises: accelerometer data, gyroscope data, and magnetometer data, and
wherein the determining initial posture information of the device coordinate system relative to a reference coordinate system based on inertial measurement unit data sent by the motion capture device comprises:
determining, by using a complementary filtering algorithm, the initial posture information of the device coordinate system relative to the reference coordinate system based on the accelerometer data, the gyroscope data and the magnetometer data sent by the motion capture device.

8. The method of any of claims 1 to 7, further comprising:

determining posture information of the device coordinate system relative to a limb coordinate system; and determining a posture transformation relationship between the limb coordinate system and the world coordinate system based on the posture information of the device coordinate system relative to the limb coordinate system and the posture information of the device coordinate system relative to the world coordinate system.

9. The method of claim 8, wherein the determining posture information of the device coordinate system relative to the limb coordinate system comprises:

determining, under a preset calibration posture, a posture transformation relationship between the limb coordinate system and a head-mounted coordinate system, and posture information of the head-mounted coordinate system relative to the world coordinate system, the head-mounted coordinate system being a coordinate system of the head-mounted display device; and
determining the posture information of the device coordinate system relative to the limb coordinate system based on the posture transformation relationship between the limb coordinate system and the head-mounted coordinate system, the posture information of the head-mounted coordinate system relative to the world coordinate system, and the posture information of the device coordinate system relative to the world coordinate system.

10. The method of claim 9, wherein determining the posture information of the device coordinate system relative to the world coordinate system comprises:
determining the posture information of the device coordinate system relative to the world coordinate system based on a corrected posture transformation relationship between the world coordinate system and the reference coordinate system.

11. The method of claim 3, wherein a number of spots on the motion capture device is at least three.

12. The method of claim 1, further comprising:
displaying an image perspective view, and displaying, in the image perspective view, guidance information for guiding a user to place the motion capture device in the image perspective view.

13. An apparatus for calibrating a motion capture device, comprising:

an image collecting module, configured to collect an image of the motion capture device through a camera comprised in a head-mounted display device, the motion capture device being worn on a limb of a human body, and the apparatus being applied to the head-mounted display device;

a posture determining module, configured to determine target posture information of a device coordinate system relative to a world coordinate system based on the image of the motion capture device, the device coordinate system being a coordinate system of the motion capture device; and

a device calibrating module, configured to calibrate the motion capture device based on the target posture information.

14. An electronic device, comprising:

a processor and a memory, the memory being configured to store a computer program, and the processor being configured to invoke and run the computer program stored in the memory, to perform the method for calibrating a motion capture device of any of claims 1 to 12.

15. A computer-readable storage medium, having a computer program stored thereon, the computer program causing a computer to perform the method for calibrating a motion capture device of any of claims 1 to 12.

16. A computer program product, comprising program instructions that, when executed on an electronic device, cause the electronic device to perform the method for calibrating a motion capture device of any of claims 1 to 12.

**1000**

FIG. 1

HEAD-MOUNTED
DISPLAY DEVICE 100

PERIPHERAL DEVICE
300

MOTION CAPTURE
DEVICE 200

FIG. 2

COLLECT AN IMAGE OF THE MOTION CAPTURE DEVICE THROUGH THE CAMERA — S101

DETERMINE TARGET POSTURE INFORMATION OF A DEVICE COORDINATE SYSTEM RELATIVE TO A WORLD COORDINATE SYSTEM BASED ON THE IMAGE OF THE MOTION CAPTURE DEVICE, THE DEVICE COORDINATE SYSTEM IS A COORDINATE SYSTEM OF THE MOTION CAPTURE DEVICE — S102

CALIBRATE THE MOTION CAPTURE DEVICE BASED ON THE TARGET POSTURE INFORMATION — S103

FIG. 3

FIG. 4

| |
|---|
| COLLECT, THROUGH THE CAMERA, A LIGHT SPOT IMAGE OF THE LIGHT EMITTING UNIT ON THE MOTION CAPTURE DEVICE |

S201

| |
|---|
| DETERMINE THE TARGET POSTURE INFORMATION OF THE DEVICE COORDINATE SYSTEM RELATIVE TO THE WORLD COORDINATE SYSTEM BASED ON THE LIGHT SPOT IMAGE |

S202

| |
|---|
| CALIBRATE THE MOTION CAPTURE DEVICE BASED ON THE TARGET POSTURE INFORMATION |

S203

FIG. 5

| DETERMINE INITIAL POSTURE INFORMATION OF THE DEVICE COORDINATE SYSTEM RELATIVE TO A REFERENCE COORDINATE SYSTEM BASED ON INERTIAL MEASUREMENT UNIT DATA SENT BY THE MOTION CAPTURE DEVICE | S301 |

| COLLECT, THROUGH THE CAMERA, A LIGHT SPOT IMAGE OF THE LIGHT EMITTING UNIT ON THE MOTION CAPTURE DEVICE | S302 |

| DETERMINE THE TARGET POSTURE INFORMATION OF THE DEVICE COORDINATE SYSTEM RELATIVE TO THE WORLD COORDINATE SYSTEM BASED ON THE LIGHT SPOT IMAGE | S303 |

| CORRECT AN POSTURE TRANSFORMATION RELATIONSHIP BETWEEN THE WORLD COORDINATE SYSTEM AND THE REFERENCE COORDINATE SYSTEM BASED ON THE TARGET POSTURE INFORMATION AND THE INITIAL POSTURE INFORMATION | S304 |

| CALIBRATE THE MOTION CAPTURE DEVICE BASED ON THE CORRECTED POSTURE TRANSFORMATION RELATIONSHIP BETWEEN THE WORLD COORDINATE SYSTEM AND THE REFERENCE COORDINATE SYSTEM | S305 |

FIG. 6

FIG. 7

| DETERMINE POSTURE INFORMATION OF THE DEVICE COORDINATE SYSTEM RELATIVE TO A LIMB COORDINATE SYSTEM | S401 |

| DETERMINE AN POSTURE TRANSFORMATION RELATIONSHIP BETWEEN THE LIMB COORDINATE SYSTEM AND THE WORLD COORDINATE SYSTEM BASED ON THE POSTURE INFORMATION OF THE DEVICE COORDINATE SYSTEM RELATIVE TO THE LIMB COORDINATE SYSTEM AND THE POSTURE INFORMATION OF THE DEVICE COORDINATE SYSTEM RELATIVE TO THE WORLD COORDINATE SYSTEM | S402 |

FIG. 8

FIG. 9

FIG. 10

FIG. 11

## INTERNATIONAL SEARCH REPORT

| International application No. |
|---|
| **PCT/CN2024/105957** |

**A. CLASSIFICATION OF SUBJECT MATTER**

G01M11/00(2006.01)i; G06T7/73(2017.01)i; G06F3/01(2006.01)i

According to International Patent Classification (IPC) or to both national classification and IPC

**B. FIELDS SEARCHED**

Minimum documentation searched (classification system followed by classification symbols)

IPC: G01M; G06T; G06F

Documentation searched other than minimum documentation to the extent that such documents are included in the fields searched

Electronic data base consulted during the international search (name of data base and, where practicable, search terms used)

CNTXT, ENTXTC, CNKI, web of science: 字跳, 李耿磊, 山君良, 陈庆林, 虚拟现实, 头戴式, 动作捕捉, 摄像, 视频, 图像, 坐标, 姿态, 校正, 校准, 发光, 光斑, 肢体, VR, VST, video see-through, optical spot, image, video, camera, calibrat+, limb, motion capture, coordinate, world coordinate, posture

**C. DOCUMENTS CONSIDERED TO BE RELEVANT**

| Category* | Citation of document, with indication, where appropriate, of the relevant passages | Relevant to claim No. |
|---|---|---|
| X | CN 111681281 A (BEIJING NOITOM TECHNOLOGY LTD.) 18 September 2020 (2020-09-18) claims 1-10, description, paragraphs [0052]-[0113], and figures 1-5 | 1, 2, 8-10, 12-16 |
| Y | CN 111681281 A (BEIJING NOITOM TECHNOLOGY LTD.) 18 September 2020 (2020-09-18) claims 1-10, description, paragraphs [0052]-[0113], and figures 1-5 | 3-7, 11 |
| Y | CN 113368486 A (QINGDAO PICO TECHNOLOGY CO., LTD.) 10 September 2021 (2021-09-10) claims 1-10, description, paragraphs [0032]-[0052], and figures 1-6 | 3-7, 11 |
| A | CN 111240469 A (BEIJING NOITOM TECHNOLOGY LTD.) 05 June 2020 (2020-06-05) entire document | 1-16 |
| A | CN 106648088 A (YINGDONG (BEIJING) TECHNOLOGY CO., LTD.) 10 May 2017 (2017-05-10) entire document | 1-16 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **09 September 2024** | **20 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/105957** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 109814714 A (BEIJING NOITOM TECHNOLOGY LTD.) 28 May 2019 (2019-05-28) entire document | 1-16 |
| A | CN 112083403 A (QINGDAO PICO TECHNOLOGY CO., LTD.) 15 December 2020 (2020-12-15) entire document | 1-16 |
| A | CN 112286343 A (QINGDAO PICO TECHNOLOGY CO., LTD.) 29 January 2021 (2021-01-29) entire document | 1-16 |
| A | CN 112527102 A (QINGDAO PICO TECHNOLOGY CO., LTD.) 19 March 2021 (2021-03-19) entire document | 1-16 |
| A | CN 114359371 A (SUZHOU HYC TECHNOLOGY CO., LTD.) 15 April 2022 (2022-04-15) entire document | 1-16 |
| A | US 2021142508 A1 (THE JOHNS HOPKINS UNIVERSITY) 13 May 2021 (2021-05-13) entire document | 1-16 |

Form PCT/ISA/210 (second sheet) (July 2022)

## INTERNATIONAL SEARCH REPORT
### Information on patent family members

International application No.

**PCT/CN2024/105957**

| Patent document cited in search report | | | Publication date (day/month/year) | Patent family member(s) | | | Publication date (day/month/year) |
|---|---|---|---|---|---|---|---|
| CN | 111681281 | A | 18 September 2020 | None | | | |
| CN | 113368486 | A | 10 September 2021 | CN | 113368486 | B | 14 March 2023 |
| CN | 111240469 | A | 05 June 2020 | None | | | |
| CN | 106648088 | A | 10 May 2017 | None | | | |
| CN | 109814714 | A | 28 May 2019 | CN | 109814714 | B | 20 November 2020 |
| CN | 112083403 | A | 15 December 2020 | CN | 112083403 | B | 10 October 2023 |
| CN | 112286343 | A | 29 January 2021 | WO | 2022057579 | A1 | 24 March 2022 |
| | | | | US | 2022358663 | A1 | 10 November 2022 |
| | | | | US | 11625841 | B2 | 11 April 2023 |
| | | | | KR | 20230054725 | A | 25 April 2023 |
| | | | | EP | 4198694 | A1 | 21 June 2023 |
| | | | | JP | 2023542668 | A | 11 October 2023 |
| CN | 112527102 | A | 19 March 2021 | None | | | |
| CN | 114359371 | A | 15 April 2022 | None | | | |
| US | 2021142508 | A1 | 13 May 2021 | US | 11386572 | B2 | 12 July 2022 |
| | | | | US | 2022366598 | A1 | 17 November 2022 |
| | | | | US | 11928838 | B2 | 12 March 2024 |
| | | | | WO | 2019152617 | A1 | 08 August 2019 |

Form PCT/ISA/210 (patent family annex) (July 2022)

**REFERENCES CITED IN THE DESCRIPTION**

**Patent documents cited in the description**

- CN 202311110278X